# EUROPÄISCHE PATENTSCHRIFT

(11) **EP 2 306 031 B1**
(45) Veröffentlichungstag und Bekanntmachung des Hinweises auf die Patenterteilung: **02.11.2016**
(21) Anmeldenummer: 10180716.2
(22) Anmeldetag: 28.09.2010
(51) Int. Cl.: F16B 35/00

(54) **Kennzeichnungssystem für Gewindebauteile**
Identification system for thread components
Système de caractérisation pour composants de filetage

(30) Priorität: 05.10.2009 DE 102009049535
(43) Veröffentlichungstag der Anmeldung: 06.04.2011
(73) Patentinhaber: Adolf Würth GmbH & Co. KG, 74653 Künzelsau (DE); Würth International AG, 7004 Chur (CH)
(72) Erfinder: Strobel, Marcel, 74626, Bretzfeld (DE)
(74) Vertreter: Patentanwälte Ruff, Wilhelm, Beier, Dauster & Partner mbB

(56) Entgegenhaltungen:
- EP-A1- 1 862 677
- DE-A1- 19 718 209
- JP-A- 2008 175 314
- US-A- 5 375 955
- US-A1- 2007 237 599

## Beschreibung

Die Erfindung betrifft eine Verwendung von Markierungen als oder für ein Kennzeichnungssystem auf einem Gewindebauteil und ein Verfahren zum Kennzeichnen eines Gewindebauteils.

Es ist bekannt, dass Schrauben in der Stirnfläche ihres Schraubenkopfs Markierungen aufweisen, die beispielsweise die Herkunft der Schrauben aus einem bestimmten Herstellungsbetrieb angeben. Außerdem können dort Angaben über beispielsweise Größen und Güte angegeben sein.

Darüber hinaus ist ein Schraubenmarkierungssystem bekannt, innerhalb dessen die Schrauben auf der Stirnseite ihres Schraubenkopfs ein geometrisches Muster eingeprägt haben (DE 20 2006 008 622). Dieses geometrische Muster soll in montiertem Zustand der Schraube das Erkennen des Herstellers der Schraube erleichtern.

Ebenfalls bekannt ist eine potenziell mehrfach verwendbare gewindefurchende Schraube, die in ihrem Gewinde Verschleißindikatoren aufweist. Diese kennzeichnen nicht die Schraube, sondern ihren Abnutzungsgrad. Die Verschleißindikatoren sind in Form von Einprägungen auf den Kanten der Gewindergänge realisiert (EP 1862677 A1).

Aus der US-Offenlegungsschrift US 2007/0237599 A1 ist ein Kennzeichnungssystem für Befestigungsbauteile bekannt, bei dem die Köpfe der Befestigungsbauteile, speziell Nägel, mit unterschiedlichen Farben markiert werden. Die unterschiedlichen Farben können dann einer Länge und Dicke der Nägel zugeordnet werden.

Aus der US-Patentschrift US 5,375,955 ist es bekannt, Schrauben und Muttern mit einer Angabe über deren Größe zu versehen. Diese Kennzeichnung kann in Form von Zählen auf einer glatten Oberfläche des Kopfes oder des Schaftes enolgen, oder auch durch Einprägen von Markierungen auf den Schraubenkopf.

Aus der japanischen Patentzusammenfassung JP 2008-175314 ist ein Schraubbolzen bekannt, der in seinem mit einem Gewinde versehenen Schaft eine Nut aufweist. In der Nut ist ein Längenmaßstab angeordnet. DE 197 18 209 A1 beschreibt Vorratstaschen für ein Gleitmittel, die im Schaftbereich zwischen den Gewindegängen einer Schranbe angeordnet sind.

Die Stirnseite des Schraubenkopfs bietet sich für die Anbringung solcher Markierungen natürlich an, da sie eben und ausreichend groß ist, so dass sich Markierungen leicht anbringen lassen. Darüber hinaus hat die Stirnseite des Schraubenkopfs den Vorteil, dass sie auch in montiertem Zustand sichtbar ist.

Nun gibt es aber auch Fälle, wo Schrauben einen Schraubenkopf aufweisen, der einen gegenüber dem Schaftdurchmesser der Schraube nur unwesentlich vergrößerten Durchmesser aufweist, so dass außerhalb der Schraubenantriebsvertiefung kein Platz mehr für Markierungen bleibt. Außerdem können Schrauben, insbesondere längere Schrauben, auch lose in Behältern liegen, beispielsweise auf der Baustelle. Hier kann die Überprüfung der Stirnseite des Schraubenkopfs schwierig werden, wenn nämlich die Schrauben erst aus den Behältern entnommen werden müssen. Bei Gewindestangen für den Baubereich fehlen Köpfe insgesamt. Bei zugeschnittenen Gewindestangen fehlt die Markierung ganz, da sie nur außen an den Endstücken vorhanden ist, wo sie eingeprägt ist.

Der Erfindung liegt die Aufgabe zu Grunde, eine Möglichkeit zu schaffen, wie man an Bauteilen mit einem Gewinde (Innen- oder Außengewinde) Informationen über Eigenschaften des Bauteils so anbringen kann, dass diese Informationen auch später, gegebenenfalls auch nach einer Entnahme eines solchen Bauteils, wieder gelesen werden können.

Zur Lösung dieser Aufgabe schlägt die Erfindung eine Verwendung von Markierungen als oder für ein Kennzeichnungssystem auf einem Gewindebauteil mit den Merkmalen des Patentanspruchs 1 und ein Verfahren zum Kennzeichnen eines Gewindebauteils mit den Merkmalen des Patentanspruchs 9 vor. Weiterbildungen der Erfindung sind Gegenstand von Unteransprüchen.

Diese Markierungen, die in einem vorbestimmten Muster angeordnet sind, können erkannt werden, wenn die Schraube oder das Gewindebauteil in einer Schachtel oder einem Werkzeugkasten liegt. Derartige Markierungen können nicht nur mit dem Auge erkannt werden, sondern auch maschinell. Insbesondere bei sehr langen Gewindebauteilen steht ausreichend Platz zur Verfügung, um solche Markierungen anzubringen. Auch dann, wenn ein solches Gewindebauteil ersetzt werden soll, kann man nach Ausbau desselben anhand der Markierungen des ausgebauten Gewindebauteils die Markierungen und somit die codierte Information erkennen, beispielsweise um welche Art und/oder Qualität es sich bei dem Gewindebauteil handelt. Wegen des großen zur Verfügung stehenden Platzes lassen sich auch weitere Angaben über die Qualität und die Herkunft des Gewindebauteils oder andere Angaben, beispielsweise Herstellungsdatum, Herstellungscharge, Herstellungsort ... codieren.

Insbesondere kann in Weiterbildung der Erfindung vorgesehen sein, dass die Markierungen in einem schmalen parallel zur Längsachse des Gewindebauteils verlaufenden Bereich angeordnet sind. In diesem Fall kann man in einer bestimmten Position der Schraube alle Markierungen erkennen, wenn man den Bereich, um den es sich handelt, in Richtung auf den Betrachter dreht.

Es ist ebenfalls möglich, die Markierungen in einem sich über einen Umfang des Gewindebauteils erstreckenden Bereich anzuordnen. Dabei ist es sinnvoll, wenn der sich über den Umfang erstreckende Bereich schräg zur Längsachse verläuft, also beispielsweise längs einer Schraubenlinie mit der gleichen Steigung wie das Gewinde.

Selbstverständlich ist auch eine Kombination beider Möglichkeiten vorgesehen.

Eine Möglichkeit, wie die Markierungen ausgestaltet sein können, besteht darin, Kerben in der Gewindekante des Gewindes auszubilden. Diese Kerben lassen sich sehr leicht erkennen. Da der Verlauf der Gewindekante festliegt, eignet sich diese Art der Markierungen besonders auch für eine maschinelle Erkennung.

Eine weitere Möglichkeit, wie die Markierungen ausgestaltet sein können, besteht darin, kleinformatige Vertiefungen anzubringen, die sowohl mit dem Auge als auch maschinell erkennbar sind.

Um den Vorgang der Herstellung der Gewindebauteile mit Verformungen einfach zu gestalten, kann in Weiterbildung der Erfindung vorgesehen sein, dass die als Markierungen dienenden Verformungen beim Walzen des Gewindebauteils mit gewalzt werden. Dies kann sowohl bei den Kerben in der Gewindekante als auch bei den kleinformatigen Vertiefungen wie auch bei sonstigen Einprägungen geschehen. Kleinformatige Vertiefungen in Form von kleinen Dellen lassen sich auch mit Hilfe von Lasern anbringen. Denkbar ist auch das Aufdrucken von Markierungen mithilfe von Farben.

Ordnet man die Markierungen beispielsweise als Kerben in einer Gewindekante längs eines schmalen Bereichs an, so kann jede Gewindewindung wegen der konstanten Steigung des Gewindes des Gewindebauteiles einen Stellenwert haben und das Vorhandensein einer Kerbe eine Wertung dieses Stellenwerts bedeuten.

Bei einer Anordnung von Markierungen längs des Umfangs kann man ebenfalls ein Rastermaß vorsehen und jedem Element des Rastermaßes einen Stellenwert zuordnen.

Markierungen können somit allgemein Kerben, Vertiefungen, Barcodes, ein Schriftzug, farbige Flächen, umlaufende Ringe oder auch an bestimmten Stellen angebrachte Symbole, beispielsweise Quadrate und Dreiecke oder dergleichen sein. Je nach Art der Markierungen sind diese beim Walzen des Gewindes des Gewindebauteils mit eingeprägt oder mithilfe eines Lasers oder mittels Farbdüsen erstellt.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine abgebrochene Seitenansicht eines Gewindebauteils in Form einer Schraube;
- Figur 2: in vergrößertem Maßstab einen Ausschnitt aus einem Gewindeschaft.

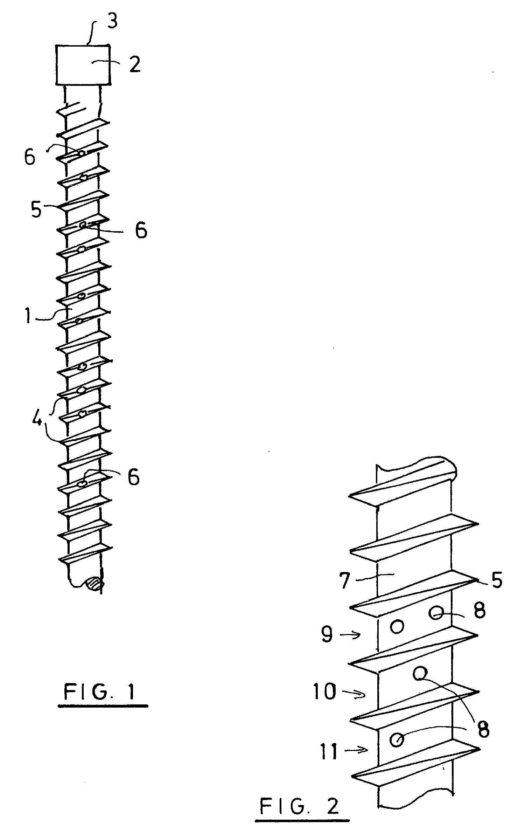

Die Figur 1 zeigt in einer Seitenansicht einen Teil einer Schraube, die hier als Beispiel für mit einem Außengewinde versehene Gewindebauteile dient. Die Schraube hat einen Schraubenschaft 1, der an einem Ende, in Figur 1 oben, mit einem Schraubenkopf 2 versehen ist. Von der Stirnfläche 3 des Schraubenkopfs 2 aus geht eine Antriebsvertiefung in das Innere des Schraubenkopfs 2 hinein. Zwischen dem Rand der Antriebsvertiefung und dem Außenumfang des Schraubenkopfs 2 ist nur wenig Platz vorhanden, so dass an dieser Stelle nur wenig Platz zur Anbringung von Markierungen oder dergleichen zur Verfügung steht.

Über den Schaft 1 erstreckt sich ein Gewinde 4 längs einer Schraubenlinie. Das Gewinde 4 weist eine scharfe Gewindekante 5 auf. Längs einer gedachten Linie, die in Figur 1 in der Mitte von oben nach unten verläuft, sind an einigen Stellen des Gewindes Kerben 6 in die Gewindekante 5 eingeformt. Dieses Einformen geschieht beim Herstellen der Schraube durch Walzen. Wie man der Figur 1 entnehmen kann, haben einige Windungen keine Kerben, während andere Windungen Kerben 6 aufweisen.

Geht man bei der dargestellten Schraube von dem Schraubenkopf 2 aus, so kann man den Gewindewindungen ausgehend vom Schraubenkopf 2 aus Stellenwerte zuordnen. Weiterhin kann man sagen, dass beispielsweise das Vorhandensein einer Kerbe 6 die Ziffer 1 und das Fehlen einer Kerbe 6 die Ziffer 0 darstellt. Dann würde die dargestellte Reihenfolge von Kerben 6 die Ziffernfolge 0110110110111001 darstellen. Dieser Ziffernfolge kann man eine Bedeutung zuordnen. Es kann sich dabei sowohl um die Bezeichnung des Herstellers als auch um die Bezeichnung einer Qualität des verwendeten Materials der Schraube handeln.

Man kann auch weitergehend annehmen, dass in dem schmalen auf einen Blick sichtbaren Bereich an jeder Windung des Gewindes Platz für zwei Kerben 6 nebeneinander ist. Dann könnte an jeder Stelle eine Ziffer mit den Werten 0 bis 3 markiert werden.

Bei dem Ausschnitt eines Gewindebauteils in Figur 2 ist eine andere Art der Markierung gewählt. Hier sind in dem Bereich 7 des Schafts 1 zwischen jeweils zwei Windungen des Gewindes 4 Stellen zur Anbringung von Einprägungen 8 vorgesehen. Die Einprägungen 8 sind im einfachsten Fall als Kreise dargestellt. Geht man wieder von einer parallel zu den Flanken des Schafts 1 verlaufenden Gerade aus, so sind für die Einprägungen in jedem Zwischenraum zwischen zwei Windungen des Gewindes 4 drei Stellen vorgesehen, an denen eine solche Einprägung 8 vorhanden sein kann. In dem ersten Zwischenraum 9, der hier mit Einprägungen 8 versehen ist, ist eine Einprägung 8 an der linken und eine Einprägung 8 an der rechten Stelle vorhanden, im nachfolgenden Zwischenraum 10 ist eine Einprägung 8 an der mittleren Stelle, und im nächsten Zwischenraum 11 eine Einprägung an der linken Stelle vorhanden. Auch auf diese Weise lassen sich Markierungen vorsehen, die zur Kodierung von bestimmten Bedeutungen verwendet werden können.

Was hier unter Zuhilfenahme von Kerben 6 und Einprägungen 8 erläutert wurde, kann auch mit anderen Arten von Verformungen geschehen, die sich beim Herstellen der Schraube durch Walzen mit einformen lassen. Beispielsweise könnte man Einprägungen auch in den Flanken der Gewindegänge vornehmen. Natürlich können die Einprägungen 8 auch andere Formen annehmen.

Auf jeder Gewindeflanke kann in einer weiteren Ausführungsform beispielsweise ein Buchstabe aufgeprägt werden, wobei die Folge dieser Buchstaben ein Wort ergibt, wenn man die Schraube schräg hält.

## Patentansprüche

1. Verwendung von Markierungen als oder für ein Kennzeichnungssystem auf einem Gewindebauteil, insbesondere einer Schraube, wobei das Gewindebauteil einen Schaft (1) mit einem sich über mindestens einen Teil des Schafts (1) erstreckenden Gewinde (4) und den Markierungen aufweist, wobei der Schaft (1) die Markierungen aufweist, wobei die Windungen des Gewindes (4) und/oder die Oberfläche des Schafts (1) in dem Raum (7) zwischen den Windungen des Gewindes (4) die in einem vorbestimmten Muster angeordneten Markierungen aufweist und dass die Markierungen eine codierte Information über das Gewindebauteil bilden.

2. Verwendung nach Anspruch 1, bei dem Markierungen in einem schmalen parallel zur Achse des Gewindebauteils verlaufenden Bereich angeordnet sind.

3. Verwendung nach Anspruch 1 oder 2, bei dem Markierungen in einem sich über einen Umfang erstreckenden Bereich angeordnet sind.

4. Verwendung nach einem der vorhergehenden Ansprüche, bei dem Markierungen als Kerben (6) in der Gewindekante (5) des Gewindes (4) ausgebildet sind.

5. Verwendung nach einem der vorhergehenden Ansprüche, bei dem Markierungen als Vertiefungen in einer Gewindeflanke des Gewindes (4) ausgebildet sind.

6. Verwendung nach einem der vorhergehenden Ansprüche, bei dem Markierungen als Einprägungen (8) in dem Schaft (1) des Gewindebauteils ausgebildet sind.

7. Verwendung nach einem der vorstehenden Ansprüche, bei dem das Vorhandensein beziehungsweise Fehlen einer Markierung an einer bestimmten Stelle innerhalb des für die Markierungen vorgesehenen Bereichs eine Kodierung darstellt.

8. Verwendung eines Kennzeichnungssystems nach einem der vorstehenden Ansprüche, bei dem der Winkelabstand zwischen zwei Markierungen, insbesondere Kerben (6) und/oder Vertiefungen und/oder Einprägungen (8), eine Kodierung darstellt.

9. Verfahren zum Kennzeichnen eines Gewindebauteils, insbesondere einer Schraube, mit dem Schritt des Anbringens von Markierungen an einem Schaft (1) des Gewindebauteils, **gekennzeichnet durch** Kodieren einer Information über das Gewindebauteil und Anbringen der kodierten Information mittels eines vorbestimmten Musters der Markierungen auf den Windungen des Gewindes (4) und/oder auf der Oberfläche des Schafts (1) in den Raum (7) zwischen den Windungen des Gewindes, wobei die Markerungen die kodierte Information über das Gewindebauteil bilden.

## Claims

1. An application of markings as or for an identification system on a threaded component, in particular a screw, wherein the threaded component (1) has a shank (1) with a thread (4) extending over at least a part of the shank (1), and with the markings, wherein the shank (1) has the markings, wherein the turns of the thread (4), and/or the surface of the shank (1) in the space (7) between the turns of the thread (4), have/has the markings arranged in a predetermined pattern, and in that the markings form coded information concerning the threaded component.

2. The application in accordance with claim 1, in which markings are arranged in a narrow region running parallel to the axis of the threaded component.

3. The application in accordance with claim 1 or 2, in which markings are arranged in a region extending over a periphery.

4. The application in accordance with one of the preceding claims, in which markings are designed as notches (6) in the edge (5) of the thread (4).

5. The application in accordance with one of the preceding claims, in which markings are designed as indentations in a flank of the thread (4).

6. The application in accordance with one of the preceding claims, in which markings are designed as imprints (8) in the shank (1) of the threaded component.

7. The application in accordance with one of the preceding claims, in which the presence or absence of a marking at a particular point within the region provided for the markings represents a coding.

8. The application of an identification system in accordance with one of the preceding claims, in which the angular separation between two markings, in particular notches (6) and/or indentations, and/or imprints (8) represents a coding.

9. A method for the identification of a threaded component, in particular a screw, with the step of the application of markings on a shank (1) of the threaded component, **characterised by** coding of information concerning the threaded component and application of the coded information by means of a predetermined pattern of the markings on the turns of the thread (4), and/or on the surface of the shank (1) in the space (7) between the turns of the thread, wherein the markings form the coded information concerning the threaded component.

## Revendications

1. Utilisation de marquages en fonction de ou pour un système d'identification sur un composant fileté, notamment une vis, le composant fileté comportant une tige (1) avec un filetage (4) s'étendant au moins sur une partie de la tige (1) et les marquages, la tige (1) comportant les marquages, dans l'espace (7) entre les spires du filetage (4), les spires du filetage (4) et/ou la surface de la tige (1) comportant les marquages placés selon un motif prédéfini et les marquages formant une information codée sur le composant fileté.

2. Utilisation selon la revendication 1, lors de laquelle les marquages sont placés dans une région étroite s'écoulant à la parallèle de l'axe du composant fileté.

3. Utilisation selon la revendication 1 ou la revendication 2, lors de laquelle les marquages sont placés dans une région s'étendant sur une circonférence.

4. Utilisation selon l'une quelconque des revendications précédentes, lors duquel les marquages sont conçus sous la forme d'entailles (6) dans l'arête filetée (5) du filetage (4).

5. Utilisation selon l'une quelconque des revendications précédentes, lors duquel les marquages sont conçus sous la forme de creux dans un flanc fileté du filetage (4).

6. Utilisation selon l'une quelconque des revendications précédentes, lors duquel les marquages sont conçus sous la forme d'estampages (8) dans la tige (1) du composant fileté.

7. Utilisation selon l'une quelconque des revendications précédentes, lors duquel la présence, respectivement l'absence d'un marquage en un endroit précis à l'intérieur de la région prévue pour les marquages représente un codage.

8. Utilisation d'un système d'identification selon l'une quelconque des revendications précédentes, lors duquel l'écart angulaire entre deux marquages, notamment entailles (6) et/ou creux et/ou estampages (8) représente un codage.

9. Procédé destiné à identifier un composant fileté, notamment une vis, comprenant l'étape de l'apposition de marquages sur une tige (1) du composant fileté, **caractérisé par** un codage d'une information concernant le composant fileté et une apposition de l'information codée au moyen d'un motif prédéfini des marquages sur les spires du filetage (4) et/ou sur la surface de la tige (1) dans l'espace (7) entre les spires du filetage, les marquages formant l'information codée concernant le composant fileté.
